# EUROPEAN PATENT SPECIFICATION

(11) **EP 3 809 812 B1**
(45) Date of publication and mention of the grant of the patent: **21.06.2023**
(21) Application number: 19742918.6
(22) Date of filing: 13.06.2019
(51) Int. Cl.: A01B 17/00, A01B 49/06

(54) **TRACTOR ATTACHMENT FOR LOOSENING AND DEEP ROOT FERTILISATION OF SOIL**
ANHÄNGERBEFESTIGUNG ZUM AUFLOCKERN UND TIEFWURZELDÜNGEN VON BODEN
ATTELAGE DE TRACTEUR POUR L'ASSOUPLISSEMENT ET LA FERTILISATION DE RACINE PROFONDE DU SOL

(30) Priority: 15.06.2018 SI 201800141
(43) Date of publication of application: 28.04.2021
(73) Proprietor: BMK - ENGINEERING d.o.o. Brezice, 8250 Brezice (SI)
(72) Inventor: KOS, Branko, 8250 Brezice (SI)
(74) Representative: Golmajer Zima, Marjanca
(86) International application number: PCT/IB2019/054940
(87) International publication number: WO 2019/239363

(56) References cited:
- CA-A- 1 270 459
- CN-A- 105 940 843
- CN-A- 106 233 905
- CN-B- 101 828 460
- SI-A- 21 870

## Description

### Object of Invention

The object of the invention is a tractor attachment for loosening and deep root fertilization of soil that is configured for soil cultivation in vineyards and orchards.

### Technical Problem

The technical problem solved by the present invention is how to configure a tractor attachment for loosening and deep root fertilization of soil that will allow accurate dosing of a fertilizer in deep root fertilization according to a fertilization plan, and thus adding the optimal fertilizer quantity depending of the needs of plants.

### Prior Art

A tractor attachment for loosening and deep root fertilization of soil disclosed in patent SI21870 (Kos) of the same inventor is known. Said tractor attachment for loosening and deep root fertilization, which is attached to a tractor via a three-point tractor attachment, has a cantilever oriented in a direction opposite the driving direction. On the cantilever, a carrier leg is attached vertically to the ground, a free end of said carrier leg being provided with a transversal member, on which a loosening plate in the form of a ploughshare is pivotally mounted. The loosening plate is connected with an oscillating rod driven by an output via an eccentric plug on the cantilever, said output being driven by a tractor engine via a cardan joint. A tractor attachment usually has two carrier legs, each being provided with one loosening plate.

The tractor attachment further comprises an assembly for deep root fertilization. The assembly for deep root fertilization comprises a fertilizer container that has a paddle wheel shaped fertilizer dosing means in the area of the discharge opening. Said wheel is driven via a chain drive by a cogwheel that is pivotally mounted on the cantilever and rolls on the cultivated soil. The function of the paddle wheel is primarily to push a fertilizer from the container into a pipe connection so that the latter is always filled with a fertilizer. The rotational speed of the paddle wheel is proportional to the rotation of the cogwheel, the speed of which is in turn proportional to the speed of advancement of the attachment or the tractor. Herewith a ratio between the speed of advancement of the attachment on the ground and the quantity of the fertilizer that is discharged is achieved. Before starting to work, the user must set the quantity of a fertilizer per unit of advancement of the cogwheel. This is done by a gear of the chain transmission. The ratio remains unchanged during the entire period of work regardless of fertilization requirements. If a different fertilizer quantity is required based on a fertilization plan, the user must discontinue the work and set a new ratio. The paddle body is driven and controlled by the cogwheel. In the case of uneven and irregular soil surfaces, the cogwheel rotates irregularly, which does not depend on the speed of the advancement of the attachment, and also the paddle wheel rotates irregularly. As a result, the quantity of the dosed fertilizer is uneven and incorrect. In addition, the paddle body in the container can push various quantities of the fertilizer in the pipe at the same speed, yet at different bulk levels of the fertilizer. Consequently, the plants are cultivated differently despite an identical quality of the soil, which results in a different quality of fruit. The paddle wheel must add the same amount of the fertilizer to both tubes of the loosening legs, which cannot always be guaranteed. The function of the paddle wheel is merely to push the amount of the fertilizer currently present in the blades in the delivery pipe. Consequently, the plants that are adjacent in the driving direction and transversal to the driving direction receive a different amount of the fertilizer despite the same soil composition. This causes an unequal quality of fruit.

Today, in the production of fruit, especially grapes for wine production, it is very important to achieve a high and uniform quality of grapes with the best possible properties. Only high-quality grapes can produce top quality wine.

### Solution to the Technical Problem

The technical problem is solved by a tractor attachment for loosening and deep root fertilization of soil, the main characteristic of which is defined in the first independent patent claim. Further characteristics are defined in dependent patent claims.

The tractor attachment for loosening and deep root fertilization of soil of the invention allows for a precise fertilizer dosage into the soil according to a fertilization plan that can vary depending on the section of the cultivated surface. The tractor attachment of the invention allows for changing the amount of the dosed fertilizer during the very process of loosening and deep root fertilization without a need for the user to stop the tractor and to change the settings on the machine.

The tractor attachment for loosening and deep root fertilization of the soil according to the invention enables the installation of sensors for a dynamic soil analysis during operation, such as sensors for a chemical soil analysis that measure the amount of potassium, phosphorus, magnesium in the soil, a moisture sensor, a soil compactness sensor.

Based on the measured values and a comparison with the predetermined values, the necessary fertilizer quantity is determined, which is then dosed to the soil via the fertilization assembly.

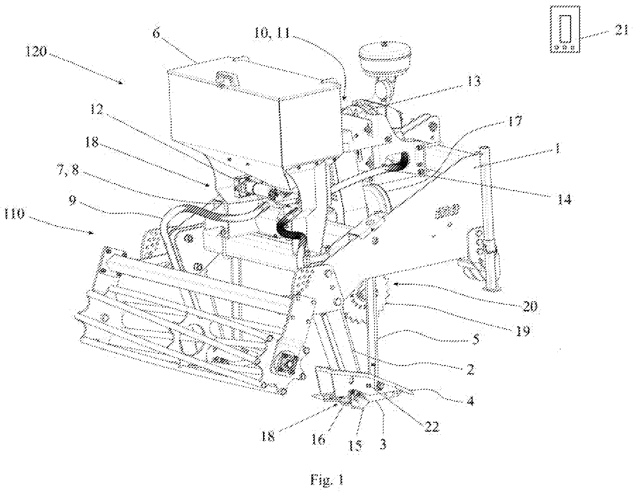

The solution to the technical problem will be presented in more detail by an embodiment and a drawing, in which Fig. 1 shows a tractor attachment, schematically.

A tractor attachment 100 for loosening and deep root fertilization of soil according to the invention, which is connected to a tractor via a three-point attachment, comprises a soil loosening assembly 110 and a deep root fertilization assembly 120.

The soil loosening assembly 110 comprises a cantilever 1, preferably two cantilevers oriented in a direction opposite the direction of tractor's driving, and a carrier leg 2 arranged on each cantilever 1 and oriented substantially vertically towards the ground. At a free end of each carrier leg 2 there is arranged a carrier 3, on which a loosening plate 4 in the form of a main ploughshare is pivotally mounted. The tractor attachment 100 has a cardan joint 17, through which a gear drive 10 is driven. The gear drive 10 drives a rod 5 in the form of a cutting blade by means of an eccentric shaft 11. The rod 5 is attached with its other end to the loosening plate 4 which is mounted on the carrier 3 of the loosening plate in such a way that, during operation, it oscillates for a certain angle, thereby raising the soil and loosening it. The function of the rod 5 is to transfer motion to the loosening plate 4 and to cut turf, so that the carrier leg 2 penetrates more easily into the set depth. An additional ploughshare 15 can be fitted along the loosening plate 4 to achieve better loosening, which, in particular in sandy soils, prevents filling with the loose soil. The rear end of the cantilever 1 is provided with a leveling cylinder to level the surface of the soil.

The deep fertilization assembly 120 comprises a container 6 containing the fertilizer. A closed dispenser 7 is arranged in the lower part of the container 6, at the outlet of which dispenser 7 a double helical worm 8 is arranged, which, by its shape, determines the exact amount of the fertilizer and delivers it to pipes 9 that extend along the respective carrier leg 2. The helical worm 8 is driven by an electric motor 12 arranged close to the container 6.The fertilizer is transported in delivery pipes 9 which run along the carrier leg 2 to the carrier 3 and under the loosening plate 4, where there is a discharge opening 23 for the discharge of the fertilizer. The fertilizer is discharged from the discharge opening 23 of the delivery tube 9 to a curve cone 16 which is attached to the carrier 3, such that the cone tip is closer to the mouth of the delivery tube 9. The pressurized fertilizer hits the curve cone 16, slides along the curve cone 16, thereby reaching a wider area of the loosened soil under the loosening plate 4.

A turbine blower 13 driven by a belt drive transmission with a cardan shaft is a constituent part of the deep root fertilization assembly 120. A pipe 14 emanating from the blower is connected to the delivery tube 9 to increase the pressure of the fertilizer in the delivery pipe 9. A wider area of the loosened soil under the loosening plate 4 is herewith achieved.

The electric motor 12 and thus the helical worm 8 are controlled by a control device 18 which controls their operation depending on the speed of movement of the tractor and the tractor attachment. Detection of the actual speed of movement of the tractor attachment 100 is carried out by means of a cogwheel 19 that is pivotally mounted on the cantilever 1. The cogwheel 19 has a sensor for measuring rotational speed 20, e.g. in the form of a tachometer, which transmits the information on the currently measured speed to a receiver in the control device 18. The control device 18 contains previously input information on the fertilization plan, such as the area to be fertilized and its extent, the type of fertilizer being used, the chemical composition of the soil. The user inputs information into the control device 18 via a control unit 21 which is preferably located in the tractor cabin and is connected via a standard tractor wire connection to the control device 18. The control device 18 converts the information on the currently measured speed of the tractor attachment using a mathematical algorithm and the previously input data on the fertilization plan to the speed of rotation of the helical worm 8 which in turn delivers an adequate, precise amount of the fertilizer from the container 6 to the respective delivery tube 9.

To prevent damage to the helical worm 8, for example owing to a foreign body entering the worm together with the fertilizer, the shaft of the electric motor 12 is provided with a tension measuring sensor that transmits the information on the load on the shaft to the control device 18 via a wireless or mechanical connection. Based on the received information on the tension on the shaft of the electric motor, the control device 18 controls its operation, thereby controlling and monitoring the operation of the helical worm 8.

The deep root fertilization assembly 120 can be upgraded with sensors 22 for a dynamic chemical soil analysis; the sensors measure the current values of chemical elements such as phosphorus, potassium, magnesium, water content, as well as soil compaction. The sensors 22 are arranged on the carrier leg 2 in the area of the loosening plate 4 which is always in the ground during operation. The information on the measured values transmitted by the sensors to the receiver of the control device and the amount of the fertilizer corresponding to the current properties of the soil is then determined in the control device 18 using a mathematical algorithm. It is compared against the values in the fertilization plan, and in the case of a difference, a new precise amount of the fertilizer is determined, which is appropriate for the soil that is currently being loosened and fertilized.

The method of deep root fertilization with the tractor attachment of the invention is carried out in the following steps:
a. input of data on the fertilization plan such as the type of fertilizer, the amount of fertilizer in the container (optional), the dimensional range, over which the deep root fertilization will be carried out, the arrangement of plants into the control device 18 by means of the control unit 21 located in the tractor cabin and in this embodiment connected to the control device 18 via the standard tractor wire connection; the connection between the control unit 21 and the control device 18 may also be wireless if adequate units are selected;
b. calibration of the deep root fertilization assembly 120, comprising weighing a particular initial discharged quantity of fertilizer on the basis of the input fertilization plan and input of this quantity into the control device 18;
c. measurement of the speed of movement of the tractor attachment 100 with the wheel 19 with a tachometer sensor and transmission of this information to the control device 18;
d. determining the amount of fertilizer based on the measured speed values using a mathematical algorithm that is part of the control device 18;
e. comparison, based on the speed of the tractor, of a certain amount of the fertilizer with the values in the fertilization plan, and in case of a deviation, determination of the speed of rotation of the helical worm 8 or the shaft of the electric motor 12;
f. discharge of a precise amount of the fertilizer from the dispenser 7 into the delivery tubes 9, at the end of which the fertilizer is discharged under pressure onto the curve cone 16 and is sprayed onto the loosened soil.

If the deep root fertilization assembly 120 is upgraded with the sensors 22 for a dynamic chemical analysis of the soil, the deep root fertilization method comprises the following steps:
a. input of data on the fertilization plan such as the type of fertilizer, the amount of fertilizer in the container (optional), the dimensional range, over which the deep root fertilization will be carried out, the arrangement of plants into the control device 18 by means of the control unit 21 located in the tractor cabin and in this embodiment connected to the control device 18 via the standard tractor wire connection; the connection between the control unit 21 and the control device 18 may also be wireless if adequate units are selected;
b. calibration of the deep root fertilization assembly 120, comprising weighing a particular initial discharged quantity of fertilizer on the basis of the input fertilization plan and input of this quantity into the control device 18;
c. measurement of the speed of movement of the tractor attachment 100 with the wheel 19 with a tachometer sensor, performing a dynamic chemical soil analysis with sensors 22 for a dynamic chemical analysis and transmission of the information on the measured values to the control device 18;
d. determining the amount of fertilizer based on the measured speed values and the dynamic chemical analysis of the soil using a mathematical algorithm that is part of the control device 18;
e. comparison, based on the speed of the tractor, of a certain amount of the fertilizer with the values in the fertilization plan, and in case of a deviation, determination of the speed of rotation of the helical worm 8 or the shaft of the electric motor 12;
f. discharge of a precise amount of the fertilizer from the dispenser 7 into the delivery tubes 9, at the end of which the fertilizer is discharged under pressure onto the curve cone 16 and is sprayed onto the loosened soil.

## Claims

1. A tractor attachment (100) for loosening and deep root fertilization, having a three-point attachment and an attachment to a cardan shaft, comprises a loosening assembly (110) and a deep root fertilization assembly (120), wherein
the soil loosening assembly (110) comprises
a cantilever (1) oriented in a direction opposite the direction of tractor's driving,
a carrier leg (2) arranged on the cantilever (1) and oriented substantially vertically towards the ground,
a carrier (3) arranged at an end of the carrier leg (2), on which carrier (3) a loosening plate (4) in the form of a main ploughshare is pivotally mounted,
a rod (5) in the form of a cutting blade attached to the loosening plate (4) and lifting it so that the latter oscillates and loosens the soil,
the deep fertilization assembly (120) comprises
a fertilizer container (6) having a dispenser (7) with a dosing wheel arranged in the bottom section,
two delivery pipes (9) emanating from the container (6),
a turbine fan (13) that delivers a pressurised air via a pipe (14) to a delivery pipe (9) to increase the pressure of the fertilizer in the delivery pipe (9),
a cogwheel (19) that is pivotally mounted on the cantilever (1) to measure the speed of the tractor attachment (100),
**characterized in that**
the dosing wheel is a double helical worm (8), whose form allows a precise amount of fertilizer to be dosed,
wherein the double helical worm (8) is driven by an electric motor (12) controlled by a control device (18).

2. Tractor attachment (100) according to Claim 1, **characterized in that** the shaft of the electric motor (12) is provided with a tension measuring sensor in communication with the control device (18).

3. Tractor attachment (100) according to any one of the preceding claims, **characterized in that** an additional ploughshare (15) is arranged along the loosening plate (4) to prevent filling of the loosened soil.

4. Tractor attachment (100) according to any one of the preceding claims, **characterized in that** a curve cone (16) is mounted on the carrier (3) at the mouth of the delivery pipe (9).

5. Tractor attachment (100) according to any one of the preceding claims, **characterized in that** a cogwheel (19) with a sensor for measuring rotational speed (20) is pivotally mounted on the cantilever (1).

6. Tractor attachment (100) according to any one of the preceding claims, **characterized in that** the deep fertilization assembly (120) comprises a control unit (21) connected with the control device.

7. Tractor attachment (100) according to any one of the preceding claims, **characterized in that** sensors (22) for a chemical analysis of the soil are arranged on the carrier leg (2) in the area of the loosening plate (4), said sensors measuring the amount of potassium, phosphorus, magnesium, and/or a moisture sensor and/or a soil compaction sensor.

8. The method of deep root fertilization with the tractor attachment of any of claims 1-7 is carried out in the following steps:
a. input of data on the fertilization plan such as the type of fertilizer, the amount of fertilizer in the container (optional), the dimensional range, over which the deep root fertilization will be carried out, the arrangement of plants into the control device (18) by means of the control unit (21) located in the tractor cabin and in this embodiment connected to the control device (18) via the standard tractor wire connection; the connection between the control unit (21) and the control device 18 may also be wireless if adequate units are selected;
b. calibration of the deep root fertilization assembly (120), comprising weighing a particular initial discharged quantity of fertilizer on the basis of the input fertilization plan and input of this quantity into the control device (18);
c. measurement of the speed of movement of the tractor attachment (100) with the wheel (19) with a tachometer sensor and transmission of this information to the control device (18);
d. determining the amount of fertilizer based on the measured speed values using a mathematical algorithm that is part of the control device (18);
e. comparison, based on the speed of the tractor, of a certain amount of the fertilizer with the values in the fertilization plan, and in case of a deviation, determination of the speed of rotation of the helical worm (8) or the shaft of the electric motor (12);
f. discharge of a precise amount of the fertilizer from the dispenser (7) into the delivery tubes (9), at the end of which the fertilizer is discharged under pressure onto the curve cone (16) and is sprayed onto the loosened soil.

9. Method of deep root fertilization according to Claim 8, wherein
step c) measurement of the speed of movement of the tractor attachment (100) with the wheel (19) with a tachometer sensor, means performing a dynamic chemical soil analysis with sensors (22) for a dynamic chemical analysis and transmission of the information on the measured values to the control device (18); and
step d) is determining the amount of fertilizer based on the measured speed values and the dynamic chemical analysis of the soil using a mathematical algorithm that is part of the control device (18).

## Patentansprüche

1. Traktoranbaugerät (100) zur Auflockerung und Tiefendüngung, das eine Dreipunktbefestigung und eine Befestigung an einer Kardanwelle aufweist, die eine Auflockerungsanordnung (110) und eine Tiefendüngungsanordnung (120) umfasst, wobei
die Bodenauflockerungsanordnung (110) umfasst
einen Ausleger (1), der in einer Richtung entgegengesetzt zu der Fahrtrichtung des Traktors ausgerichtet ist,
ein Tragbein (2), das an dem Ausleger (1) angeordnet und im Wesentlichen vertikal zum Untergrund ausgerichtet ist,
einen Träger (3), der an einem Ende des Tragbeins (2) angeordnet ist, wobei an dem Träger (3) eine Auflockerungsplatte (4) in der Form einer Hauptpflugschar schwenkbar montiert ist,
einen Stab (5) in der Form eines Schneidmessers, der an der Auflockerungsplatte (4) angebracht ist und sie so anhebt, dass die letztere oszilliert und den Boden auflockert,
die Tiefendüngungsanordnung (120) umfasst
einen Düngemittelbehälter (6), der eine Abgabevorrichtung (7) mit einem im unteren Bereich angeordneten Dosierrad aufweist,
zwei Zuführrohre (9), die von dem Behälter (6) ausgehen,
ein Turbinengebläse (13), das Druckluft über ein Rohr (14) zu einem Zuführrohr (9) zuführt, um den Druck des Düngemittels in dem Zuführrohr (9) zu erhöhen,
ein Zahnrad (19), das an dem Ausleger (1) zum Messen der Geschwindigkeit des Traktoranbaugeräts (100) schwenkbar montiert ist,
**dadurch gekennzeichnet, dass**
das Dosierrad eine doppelschrägverzahnte Schnecke (8) ist, deren Form eine Dosierung einer präzisen Menge an Düngemittel ermöglicht,
wobei die doppelschrägverzahnte Schnecke (8) durch einen Elektromotor (12) angetrieben wird, der durch eine Steuervorrichtung (18) gesteuert wird.

2. Traktoranbaugerät (100) nach Anspruch 1, **dadurch gekennzeichnet, dass** die Welle des Elektromotors (12) mit einem Spannungsmesssensor in Kommunikation mit der Steuervorrichtung (18) versehen ist.

3. Traktoranbaugerät (100) nach einem der vorhergehenden Ansprüche, **dadurch gekennzeichnet, dass** eine zusätzliche Pflugschar (15) entlang der Auflockerungsplatte (4) angeordnet ist, um ein Füllen des aufgelockerten Bodens zu verhindern.

4. Traktoranbaugerät (100) nach einem der vorhergehenden Ansprüche, **dadurch gekennzeichnet, dass** ein Kurvenkonus (16) an dem Träger (3) an der Mündung des Zuführrohrs (9) montiert ist.

5. Traktoranbaugerät (100) nach einem der vorhergehenden Ansprüche, **dadurch gekennzeichnet, dass** ein Zahnrad (19) mit einem Sensor zum Messen einer Drehgeschwindigkeit (20) schwenkbar an dem Ausleger (1) montiert ist.

6. Traktoranbaugerät (100) nach einem der vorhergehenden Ansprüche, **dadurch gekennzeichnet, dass** die Tiefendüngungsanordnung (120) eine Steuereinheit (21) umfasst, die mit der Steuervorrichtung verbunden ist.

7. Traktoranbaugerät (100) nach einem der vorhergehenden Ansprüche, **dadurch gekennzeichnet, dass** Sensoren (22) für eine chemische Analyse des Bodens an dem Tragbein (2) im Bereich der Auflockerungsplatte (4), wobei die Sensoren die Menge an Kalium, Phosphor, Magnesium messen, und/oder ein Feuchtigkeitssensor und/oder ein Bodenverdichtungssensor angeordnet sind.

8. Verfahren zur Tiefendüngung mit dem Traktoranbaugerät nach einem der Ansprüche 1-7, das in den folgenden Schritten ausgeführt wird:
a. Eingabe von Daten zu dem Düngungsplan, wie etwa die Art von Düngemittel, die Menge an Düngemittel in dem Behälter (optional), den Abmessungsbereich, über den die Tiefendüngung ausgeführt wird, die Anordnung von Pflanzen, in die Steuervorrichtung (18) mittels der Steuereinheit (21), die sich in der Traktorkabine befindet und in dieser Ausführungsform mit der Steuervorrichtung (18) über die Standard-Traktorkabelverbindung verbunden ist; wobei die Verbindung zwischen der Steuereinheit (21) und der Steuervorrichtung 18 auch drahtlos sein kann, wenn geeignete Einheiten ausgewählt werden;
b. Kalibrierung der Tiefendüngungsanordnung (120), umfassend Wiegen einer bestimmten anfänglichen ausgestoßenen Menge an Düngemittel auf der Basis des eingegebenen Düngungsplans und Eingabe dieser Menge in die Steuervorrichtung (18);
c. Messung der Bewegungsgeschwindigkeit des Traktoranbaugeräts (100) mit dem Rad (19) mit einem Tachometersensor und Übertragung dieser Informationen an die Steuervorrichtung (18);
d. Bestimmen der Menge an Düngemittel basierend auf den gemessenen Geschwindigkeitswerten unter Verwenden eines mathematischen Algorithmus, der Teil der Steuervorrichtung (18) ist;
e. Vergleich, basierend auf der Geschwindigkeit des Traktors, einer gewissen Menge des Düngemittels mit den Werten in dem Düngungsplan, und im Fall einer Abweichung, Bestimmung der Drehgeschwindigkeit der schrägverzahnten Schnecke (8) oder der Welle des Elektromotors (12);
f. Ausstoßen einer präzisen Menge des Düngemittels aus der Abgabevorrichtung (7) in die Zuführrohre (9), an deren Ende das Düngemittel unter Druck auf den Kurvenkonus (16) ausgestoßen wird und auf den aufgelockerten Boden gesprüht wird.

9. Verfahren zur Tiefendüngung nach Anspruch 8, wobei
Schritt c) Messung der Bewegungsgeschwindigkeit des Traktoranbaugeräts (100) mit dem Rad (19) mit einem Tachometersensor Durchführen einer dynamischen chemischen Bodenanalyse mit Sensoren (22) für eine dynamische chemische Analyse und Übertragung der Informationen zu den gemessenen Werten an die Steuervorrichtung (18) bedeutet; und
Schritt d) Bestimmen der Menge an Düngemittel basierend auf den gemessenen Geschwindigkeitswerten und der dynamischen chemischen Analyse des Bodens unter Verwenden eines mathematischen Algorithmus, der Teil der Steuervorrichtung (18) ist, ist.

## Revendications

1. Attelage de tracteur (100) pour l'ameublissement et la fertilisation de racine profonde, ayant un attelage trois points et un attelage à un arbre à cardan, qui comprend un ensemble d'ameublissement (110) et un ensemble de fertilisation de racine profonde (120), dans lequel
l'ensemble d'ameublissement du sol (110) comprend
un porte-à-faux (1) orienté dans une direction opposée à la direction de conduite du tracteur,
une jambe de support (2) agencée sur le porte-à-faux (1) et orientée sensiblement verticalement vers le sol,
un support (3) agencé au niveau d'une extrémité de la jambe de support (2), sur lequel support (3) une plaque d'ameublissement (4) sous la forme d'un soc principal est montée de manière pivotante,
une tige (5) sous la forme d'une lame de coupe fixée à la plaque d'ameublissement (4) et levant celle-ci de sorte que cette dernière oscille et ameublit le sol,
l'ensemble de fertilisation profonde (120) comprend
un récipient d'engrais (6) ayant un distributeur (7) avec une roue de dosage agencée dans la section inférieure,
deux tuyaux de distribution (9) émanant du récipient (6),
un ventilateur à turbine (13) qui distribue un air sous pression par l'intermédiaire d'un tuyau (14) à un tuyau de distribution (9) pour augmenter la pression de l'engrais dans le tuyau de distribution (9),
un pignon (19) qui est monté de manière pivotante sur le porte-à-faux (1) pour mesurer la vitesse de l'attelage de tracteur (100),
**caractérisé en ce que**
la roue de dosage est une vis sans fin à double hélice (8), dont la forme permet de doser une quantité précise d'engrais,
dans lequel la vis sans fin à double hélice (8) est entraînée par un moteur électrique (12) commandé par un dispositif de commande (18).

2. Attelage de tracteur (100) selon la revendication 1, **caractérisé en ce que** l'arbre du moteur électrique (12) est pourvu d'un capteur de mesure de tension en communication avec le dispositif de commande (18).

3. Attelage de tracteur (100) selon l'une quelconque des revendications précédentes, **caractérisé en ce qu'**un soc supplémentaire (15) est agencé le long de la plaque d'ameublissement (4) pour empêcher le remplissage du sol ameubli.

4. Attelage de tracteur (100) selon l'une quelconque des revendications précédentes, **caractérisé en ce qu'**un cône courbe (16) est monté sur le support (3) au niveau de la bouche du tuyau de distribution (9).

5. Attelage de tracteur (100) selon l'une quelconque des revendications précédentes, **caractérisé en ce qu'**un pignon (19) doté d'un capteur pour mesurer la vitesse de rotation (20) est monté de manière pivotante sur le porte-à-faux (1).

6. Attelage de tracteur (100) selon l'une quelconque des revendications précédentes, **caractérisé en ce que** l'ensemble de fertilisation profonde (120) comprend une unité de commande (21) connectée au dispositif de commande.

7. Attelage de tracteur (100) selon l'une quelconque des revendications précédentes, **caractérisé en ce que** des capteurs (22) pour une analyse chimique du sol sont agencés sur la jambe de support (2) dans la zone de la plaque d'ameublissement (4), lesdits capteurs mesurant la quantité de potassium, de phosphore, de magnésium, et/ou un capteur d'humidité et/ou un capteur de compactage du sol.

8. Procédé de fertilisation de racine profonde avec l'attelage de tracteur selon l'une quelconque des revendications 1 à 7 mis en œuvre selon les étapes suivantes :
a. la saisie de données sur le plan de fertilisation telles que le type d'engrais, la quantité d'engrais dans le récipient (facultatif), la plage dimensionnelle, sur laquelle la fertilisation de racine profonde sera effectuée, l'agencement de plants dans le dispositif de commande (18) au moyen de l'unité de commande (21) située dans la cabine de tracteur et dans ce mode de réalisation connectée au dispositif de commande (18) par l'intermédiaire de la connexion filaire standard du tracteur ; la connexion entre l'unité de commande (21) et le dispositif de commande (18) pouvant également être sans fil si des unités adéquates sont choisies ;
b. l'étalonnage de l'ensemble de fertilisation de racine profonde (120), comprenant la pesée d'une quantité déchargée initiale particulière d'engrais sur la base du plan de fertilisation saisi et la saisie de cette quantité dans le dispositif de commande (18) ;
c. la mesure de la vitesse de mouvement de l'attelage de tracteur (100) avec la roue (19) à l'aide d'un capteur tachymètre et la transmission de ces informations au dispositif de commande (18) ;
d. la détermination de la quantité d'engrais sur la base des valeurs de vitesse mesurées à l'aide d'un algorithme mathématique qui fait partie du dispositif de commande (18) ;
e. la comparaison, sur la base de la vitesse du tracteur, d'une certaine quantité d'engrais avec les valeurs dans le plan de fertilisation, et en cas d'écart, la détermination de la vitesse de rotation de la vis sans fin hélicoïdale (8) ou de l'arbre du moteur électrique (12) ;
f. le déchargement d'une quantité précise d'engrais depuis le distributeur (7) dans les tubes de distribution (9), au bout desquels l'engrais est déchargé sous pression sur le cône courbe (16) et est pulvérisé sur le sol ameubli.

9. Procédé de fertilisation de racine profonde selon la revendication 8, dans lequel
l'étape c) la mesure de la vitesse de mouvement de l'attelage de tracteur (100) avec la roue (19) à l'aide d'un capteur tachymètre, signifie la réalisation d'une analyse de sol chimique dynamique à l'aide de capteurs (22) pour une analyse chimique dynamique et la transmission des informations sur les valeurs mesurées au dispositif de commande (18) ; et
l'étape d) consiste à déterminer la quantité d'engrais sur la base des valeurs de vitesse mesurées et de l'analyse chimique dynamique du sol à l'aide d'un algorithme mathématique qui fait partie du dispositif de commande (18).
